# EUROPÄISCHE PATENTSCHRIFT

(11) **EP 1 972 792 B1**
(45) Veröffentlichungstag und Bekanntmachung des Hinweises auf die Patenterteilung: **02.05.2018**
(21) Anmeldenummer: 08004746.7
(22) Anmeldetag: 14.03.2008
(51) Int. Cl.: F04D 13/08, F04D 15/02, G01F 23/00, H01H 35/18

(54) **Tauchpumpenanordnung**
Submersible pump assembly
Ensemble pompe submersible

(30) Priorität: 17.03.2007 DE 102007012855
(43) Veröffentlichungstag der Anmeldung: 24.09.2008
(73) Patentinhaber: HUSQVARNA AB, 561 82 Huskvarna (SE)
(72) Erfinder: Agrawal, Ram Krishna, 89231 Neu-Ulm (DE); Waigel, Hans, 89194 Schnürpflingen (DE)
(74) Vertreter: Finkele, Rolf

(56) Entgegenhaltungen:
- WO-A1-96/19621
- JP-A- 2001 041 188
- JP-A- 2006 070 729
- JP-A- 2006 274 819
- US-A- 4 437 811

## Beschreibung

Die Erfindung betrifft eine Tauchpumpenanordnung mit einer Sensoranordnung nach dem Oberbegriff des Anspruchs 1. Eine solche Anordnung ist z.B. aus irgendeiner der JP-A-2006070729 oder JP-A-2006274819 bekannt.

Tauchpumpen sind häufig mit einer automatischen Schalteranordnung versehen, mittels welcher der Motor der auf einer Grundfläche aufgestellten Tauchpumpe eingeschaltet wird, wenn der Wasserstand über der Grundfläche einen oberen Pegel erreicht und die Pumpe automatisch ausgestaltet wird, wenn der Wasserstand unter einen unteren Pegel absinkt. Für solche Schalteranordnungen sind beispielsweise Schwimmerschalter eingesetzt. In anderer Ausführung kann ein Sensorkörper in relativ zur Grundfläche und zum Pumpengehäuse höhenverstellbarer Position an dem Gehäuse gehalten sein.
So beschreibt die japanische Offenlegungsschrift JP-A-2006070729 eine Tauchpumpe, an der ein in normaler Betriebsposition der Pumpe vertikal verlaufender Führungsstab montiert ist, an welchem sich übereinander zwei bezüglich ihrer Höhenposition verschiebbare kapazitive Sensoren befinden. Jeder dieser beiden Sensoren ist über eine elektrische Leitung mit der Pumpensteuerung verbunden. Erreicht der Flüssigkeitsstand den oberen der beiden Sensoren, so beginnt die Pumpe mit der Flüssigkeitsförderung. Senkt sich der Flüssigkeitsstand unter den unteren Sensor ab, so stoppt die Pumpensteuerung die Förderung. Um die elektrischen Leitungen zwischen den Sensoren und der Pumpensteuerung vor Beschädigung besser schützen zu können wird in der japanischen Offenlegungsschrift JP-A-2006274819 vorgeschlagen, die Leitungen als auch Sensoren innerhalb von in den Führungsstab eingebrachten Längsnuten zu führen.
Auch die Druckschrift WO 96/19621 A1 zeigt eine Tauchpumpe mit einer stangenartigen Sensoraufnahme, an welcher Sensoren am Pumpengehäuse angeordnet sind.
Der Erfindung liegt die Aufgabe zugrunde, eine vorteilhafte Tauchpumpenanordnung mit einer Sensoranordnung mit einem relativ zu einem Pumpengehäuse höhenverstellbaren Sensorkörper anzugeben.

Die Erfindung ist im Anspruch 1 beschrieben. Die abhängigen Ansprüche enthalten vorteilhafte Ausgestaltungen und Weiterbildungen der Erfindung.
Ausgehend von einer Tauchpumpenanordnung mit einer Sensoranordnung mit einem relativ zu einem Pumpengehäuse (und damit auch relativ zur Grundfläche) höhenverstellbaren Sensorkörper, welcher wenigstens eine erste, die Anwesenheit von Wasser am Ort des Sensorkörpers detektierende Elektrode besitzt, sieht die Erfindung gemäß Anspruch 1 unter anderem vor, dass die Sensoranordnung wenigstens eine weitere Elektrode enthält und dass die erste Elektrode des Sensorkörpers relativ zu der weiteren Elektrode höhenverstellbar ist.
Durch die wenigstens eine weitere Elektrode ergeben sich vorteilhafte funktionale Ausgestaltungen der Tauchpumpenanordnung mit äußerst geringem Aufwand.
Die weitere Elektrode an bezüglich des Pumpengehäuses fester Position und unterhalb der ersten Elektrode angeordnet. Die erste Elektrode ist durch Höhenverstellung nach unten über ihren Verstellbereich mit der weiteren Elektrode in direkten Kontakt bringbar und bewirkt in diesem direkten Kontakt einen Dauerbetrieb der Pumpe. Insbesondere bei einer bevorzugten Detektion von Wasser am Ort des höhenverstellbaren Sensorkörpers ergibt sich hierdurch eine besonders einfache und vorteilhafte Möglichkeit, von dem Betrieb der Pumpe mit automatischer Ein- und Ausschaltung zu einer Einstellung mit Dauerbetrieb überzugehen, da bei direktem Kontakt der beiden Elektroden unabhängig vom Vorhandensein von Wasser immer ein geringer Widerstand zwischen der ersten und der weiteren Elektrode besteht und ohne Änderung der Auswertung des Sensorsignals der Sensoranordnung die Pumpe unabhängig vom Wasserstand, insbesondere also auch bei weiter absinkendem Wasserstand weiterläuft.
In anderer vorteilhafter Ausführungsform kann eine weitere Elektrode an einem weiteren Sensorkörper vorgesehen sein, welcher seinerseits relativ zum Pumpengehäuse und relativ zu dem ersten Sensorkörper höhenverstellbar ist. Die beiden Sensorkörper können vorteilhafterweise für obere und untere Schaltpunkte einer Schalthysterese entsprechend dem Verhalten der gebräuchlichen Schwimmerschalter dienen. Die Verschaltung der Sensorsignale von den beiden Sensorkörpern kann auf unterschiedliche Weise erfolgen. Die beiden Sensorkörper können vertikal übereinander in einer Linie angeordnet sein, wodurch sich eine zwangsläufige Reihenfolge in der relativen Höhenlage der beiden Sensorkörper ergibt. In anderer Ausführung können die beiden Sensorkörper auch seitlich voneinander getrennt und in unterschiedlicher relativer Vertikalposition zueinander positioniert werden, so dass sowohl der erste Sensorkörper höher als der zweite Sensorkörper liegen kann und auch der zweite Sensorkörper höher liegen kann als der erste Sensorkörper.

Die Erfindung ist nachfolgend anhand eines bevorzugten Ausführungsbeispiels unter Bezugnahme auf die Abbildung noch eingehend veranschaulicht. Dabei zeigt
- Fig. 1: eine Schrägansicht einer Pumpe mit einer Sensoranordnung.
- Fig. 2: eine Sensoranordnung mit zwei höhenverstellbaren Sensorkörpern.

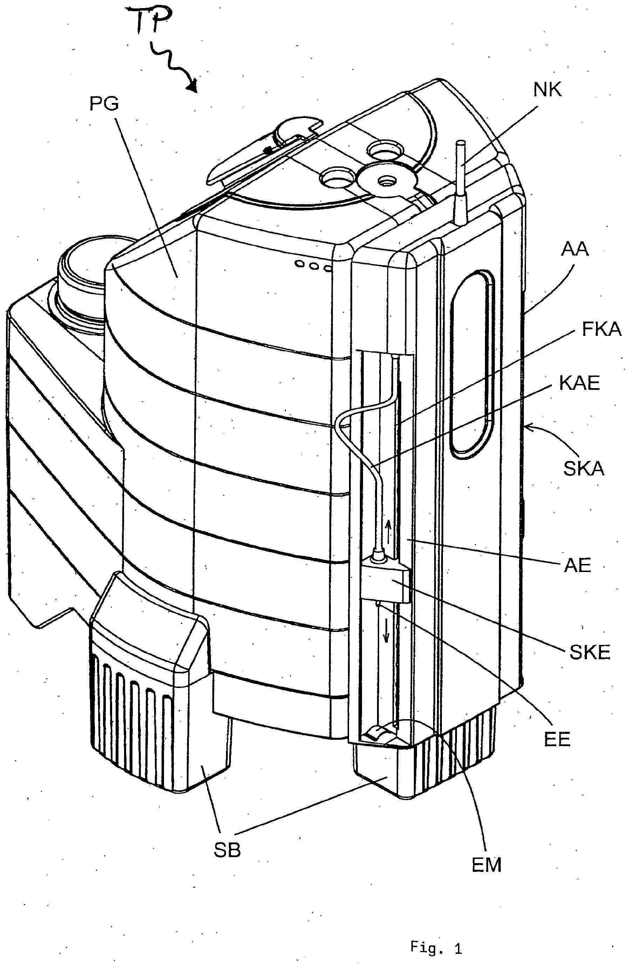

Fig. 1 zeigt eine Tauchpumpe TP mit einem Pumpengehäuse PG, welches über Standbeine SB auf einer Grundfläche aufstellbar ist. Die Ansaugöffnung der Pumpe sei in der Zeichnung verdeckt an der Unterseite der Pumpe der Grundfläche zugewandt vorgesehen. Ansaugöffnungen können aber auch am seitlichen unteren Rand des Pumpengehäuses angeordnet sein. Für die Aufstellung der Pumpe auf einer Grundfläche sind verschiedene Anordnungen und verschiedene Distanzen der Ansaugöffnung über der Grundfläche an sich bekannt. Insbesondere für flachsaugende Tauchpumpen können die Standbeine SB wesentlich kürzer ausgeführt sein oder auch ganz entfallen und durch andere Abstandselemente zwischen der Ansaugöffnung der Tauchpumpe und der Grundfläche ersetzt sein.

Der in dem Pumpengehäuse PG angeordnete Elektromotor der Tauchpumpenanordnung ist über ein Netzkabel NK mit elektrischer Leistung versorgbar.

In einer ersten Aussparung AE ist eine in normaler Betriebsposition der Pumpe vertikal verlaufende Führung FKA, beispielsweise in Form einer Nut, ausgebildet. In der Aussparung AE und der Nut FKA ist ein erster Sensorkörper SKE höhenverstellbar geführt, welcher stufenlos oder in diskreten verschiedenen Höhenpositionen relativ zum Pumpengehäuse positionierbar ist. Der Sensorkörper SKE ist über ein Kabel KAE mit einer im Pumpengehäuse angeordneten elektrischen oder elektronischen Steuereinrichtung verbunden. Das Kabel KAE kann insbesondere auch in Form eines sog. Spiralkabels ausgeführt sein.

An dem Sensorkörper SKE ist eine erste Elektrode EE ausgebildet, welche im skizzierten bevorzugten Beispiel von dem Sensorkörper SKE an dessen Unterseite nach unten weist. Die Form der Elektrode EE ist für die Funktion der Tauchpumpenanordnung nachrangig. Die Detektion des Wasserpegels um die Pumpe erfolgt mittels des ersten Sensorkörpers SKE in der Weise, dass der elektrische Widerstand zwischen der ersten Elektrode EE und einer tiefer angeordneten Bezugselektrode EM, welche ortsfest an dem Pumpengehäuse angeordnet ist, gemessen wird. Solange die erste Elektrode EE des ersten Sensorkörper SKE nicht mit die Pumpe umgebenden Wasser in Kontakt ist, ist der elektrische Widerstand zwischen der ersten Elektrode EE und der Bezugselektrode EM sehr hoch. Wenn bei steigendem Wasserpegel die Wasseroberfläche die erste Elektrode EE erreicht, sinkt der Widerstand zwischen der ersten Elektrode EE und der Bezugselektrode EM schlagartig auf einen wesentlich niedrigeren Wert, so dass aus dem elektrischen Widerstand oder aus der reziproken Größe der elektrischen Leitfähigkeit zwischen der ersten Elektrode EE und der Bezugselektrode EM die Anwesenheit von Wasser am Ort der ersten Elektrode EE bzw. des diese tragenden ersten Sensorkörpers SKE festgestellt werden kann.
In anderer Ausführung kann auch der erste Sensorkörper SKE zwei Elektroden besitzen, welche mit dem umgebenden Wasser in Kontakt treten können, wobei wiederum der Widerstand zwischen zwei solchen Elektroden am Sensorkörper SKE gemessen und daraus eine Aussage über das Vorliegen von Wasser auf Höhe des Sensorkörpers SKE abgeleitet wird.
Typischerweise wird die Pumpe eingeschaltet, wenn die Sensoranordnung das Auftreten von Wasser auf Höhe des ersten Sensorkörpers SKE festgestellt wird.
Die Detektion der Anwesenheit von Wasser am Ort des ersten Sensorkörpers SKE kann auch durch Messung einer andern physikalischen Größe, beispielsweise einer Kapazität oder einer Wärmeleitfähigkeit der Umgebung vorgenommen werden.
Eine automatische Abschaltung kann durch die Steuereinrichtung dann erfolgen, wenn am Ort des ersten Sensorkörpers SKE über die erste Elektrode EE kein Wasser mehr detektiert wird. Da dies in Fällen, bei welchen die Rate des Abpumpens von Wasser durch die Pumpe einerseits und die Rate des Zuflusses von Wasser annähernd gleich groß sind, zu einem häufigen Ein- und Ausschalten der Pumpe führen kann, kann in an sich bekannter Weise vorgesehen sein, eine Schalthysterese zwischen zwei Pegelständen einzuführen, wie dies bei den gebräuchlichen Schwimmerschaltern auch gegeben ist. Eine solche Schalthysterese kann beispielsweise dadurch gegeben sein, dass ein unterer Wasserpegel, bei dessen Unterschreiten die Pumpe ausgeschaltet wird, durch eine in fester Position am Pumpengehäuse angeordnete weitere Elektrode detektiert wird. Die weitere Elektrode kann beispielsweise je nach Ausführung des Messprinzips durch die Elektrode EM oder durch eine weitere, in relativ tiefer Position ortsfest am Gehäuse angeordnete weitere Elektrode gegeben sein.

In bevorzugter Ausführungsform ist eine weitere Elektrode an einem weiteren Sensorkörper SKA vorgesehen, welcher in der Ansicht der Abbildung weitgehend verdeckt und nur mit SKA bezeichnet angedeutet ist. Der weitere Sensorkörper kann vorteilhafterweise im wesentlichen gleich zu dem ersten Sensorkörper SKE ausgebildet sein. Insbesondere kann der weitere Sensorkörper SKA auch die Elektrode EM als mit dem Sensorkörper SKE gemeinsame Bezugselektrode für die Messung einer elektrischen Größe, insbesondere eines elektrischen Widerstands bzw. eines elektrischen Leitwerts benutzen.

Der weitere Sensorkörper SKA ist vorzugsweise in gleicher Art wie der erste Sensorkörper SKE in einer Aussparung AA des Gehäuses und einer dort vorgesehenen Führungsnut vertikal verschiebbar und in verschiedenen Höhenpositionen positionierbar. Der Sensorkörper SKA liefert unabhängig von dem Sensorkörper SKE ein eigenes Sensorsignal an eine Auswerte- oder Steuereinrichtung der Tauchpumpenanordnung.

Typischerweise wird einer der beiden Sensorkörper, beispielsweise der erste Sensorkörper SKE in einer höheren Position zur Detektion eines oberen Wasserpegels und der andere Sensorkörper SKA in einer tieferen Position für die Detektion eines unteren Wasserpegels eingestellt und das Sensorsignal des ersten Sensorkörper zum Einschalten und das Sensorsignal des zweiten Sensorkörpers zum Ausschalten der Pumpe in der Steuer- und Auswerteeinrichtung herangezogen.

Während in der in der Abbildung skizzierten Ausführungsform der erste Sensorkörper SKE und der weitere Sensorkörper SKA in getrennten Führungen höhenverstellbar sind, kann in anderer Ausführung auch vorgesehen sein, die beiden Sensorkörper übereinander in derselben Aussparung und Führung zu führen. Wodurch die vertikale Aufeinanderfolge der beiden Sensorkörper festgelegt ist.

In einer besonders vorteilhaften Weiterbildung kann vorgesehen sein, dass der erste Sensorkörper SKE oder, bei Vorliegen mehrerer Sensorkörper wenigstens einer der Sensorkörper in eine Position gebracht werden kann, in welcher das Sensorsignal dieses Sensorkörpers in der Steuer- und Auswerteeinrichtung einen Dauerbetrieb der Pumpe unabhängig vom aktuellen Wasserpegel, also auch bei weiter absinkendem Pegel, bewirkt. Durch die Verwendung wenigstens eines Sensorkörpers für eine solche Dauerbetriebsfunktion kann ein separater Schalter hierfür eingespart werden.

Im skizzierten Beispiel ist für eine solche Dauerbetriebsfunktion in vorteilhafter Ausführung vorgesehen, dass die Elektrode EE des ersten Sensorkörpers SKE durch Verschieben des ersten Sensorkörpers SKE nach unten mit der Bezugselektrode EM direkt kontaktiert werden kann, wodurch der Widerstand zwischen der ersten Elektrode EE und der Bezugselektrode EM unabhängig vom Wasserstand niedrig ist und in der Steuer- und Auswerteeinrichtung ohne grundlegende Änderung der Auswertekriterien so bewertet wird, als wäre Wasser an der Position des ersten Sensorkörpers vorhanden, was als Einschaltkriterium in bevorzugter Ausführung vorgegeben sein kann.

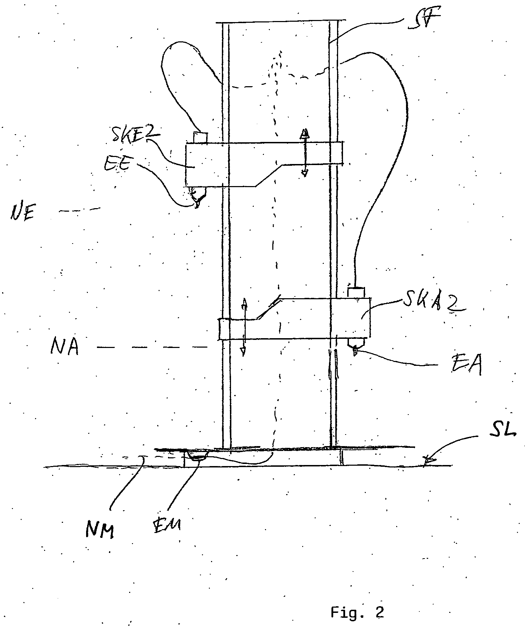

Fig. 2 zeigt eine Sensoranordnung mit zwei höhenverstellbaren Sensorkörpern, welche in einer gemeinsamen Führung SF höhenverstellbar geführt sind. Durch die Führung beider Sensorkörper SKE2 und SKA2 in derselben Führung SF ist immer gewährleistet, dass der erste Sensorkörper SKE2, welcher die für die Einschaltung der Pumpe dienende Sensorelektrode EE trägt, immer bezüglich der Standfläche FL der Pumpe höher liegt als der zweite Sensorkörper SKA2, welcher eine Elektrode EA trägt, deren Funktion auch bereits zu der Anordnung nach Fig. 1 erläutert ist. Vorteilhafterweise kann die von dem ersten Sensorkörper SKE2 nach unten ragende und an diesem befestigte Elektrode EE an dem Sensorkörper SKA2 in einer Verschiebebewegung nach unten vorbei geführt werden, bis der Sensorkörper SKE2 in vertikaler Richtung an dem Sensorkörper SKA2 anliegt und deshalb nicht weiter nach unten verschoben werden kann. Hierdurch können auch sehr geringe Höhenunterschiede zwischen der Elektrode EE und der Elektrode EA eingestellt werden. Die Höhe der ersten Elektrode EE über der Standfläche SL ist mit NE bezeichnet, die Höhe der Elektrode EA über der Standfläche mit NA. Eine weitere Elektrode EM ist in geringem Höhenabstand NM von der Standfläche angeordnet und kann, wie in dem Beispiel nach Fig. 1, in Zusammenwirken mit der ersten Elektrode EE bei direktem Kontakt dieser beiden Elektroden dazu dienen, einen Dauerbetrieb der Pumpe zu bewirken. Die Elektrode EA ist dabei ohne Funktion.

## Patentansprüche

1. Tauchpumpenanordnung mit einer Sensoranordnung mit einem relativ zu einem Pumpengehäuse (TP) höhenverstellbaren Sensorkörper (SKE) mit wenigstens einer ersten, die Anwesenheit von Wasser am Ort des Sensorkörpers (SKE, SKE2) detektierenden Elektrode (EE) und einer Steuereinrichtung zur Auswertung eines von der Sensoranordnung gewonnenen Sensorsignals zum Ein- und/oder Ausschalten der Pumpe (TP),
wobei die Sensoranordnung wenigstens eine weitere Elektrode (EM) enthält und die erste Elektrode (EE) relativ zu der weiteren Elektrode höhenverstellbar ist **dadurch gekennzeichnet,**
**dass** die weitere Elektrode (EM) an bezüglich des Pumpengehäuses (PG) fester Position angeordnet ist,
**dass** die weitere Elektrode (EM) unterhalb der ersten Elektrode (EE) angeordnet ist,
und **dass** die erste Elektrode (EE) durch Höhenverstellung nach unten in direktem Kontakt mit der weiteren Elektrode (EM) bringbar ist.

2. Anordnung nach Anspruch 1, **dadurch gekennzeichnet, dass** eine weitere Elektrode an einem weiteren Sensorkörper (SKA, SKA2) angeordnet ist, welche relativ zu dem ersten Sensorkörper (SKE, SKE2) und relativ zum Pumpengehäuse (PG) höhenverstellbar ist.

3. Anordnung nach einem der Ansprüche 1 bis 2, **dadurch gekennzeichnet, dass** die Sensoranordnung die Anwesenheit von Wasser über die Messung der elektrischen Leitfähigkeit bzw. des elektrischen Widerstands zwischen zwei Elektroden (EE, EM, EA) detektiert.

## Claims

1. Submersible pump assembly with a sensor arrangement with a relative to a pump housing (TP) height adjustable sensor body (SKE) with at least a first electrode (EE) detecting the presence of water at the location of the sensor body (SKE, SKE2) and a control device for evaluating a sensor signal obtained by the sensor arrangement for turning the pump (TP) on and off, wherein the sensor arrangement includes at least one further electrode (EM) and the first electrode (EE) is height adjustable relative to the further electrode,
**characterized in that** the further electrode (EM) is arranged at a fixed position with respect to the pump housing (PG),
**in that** the further electrode (EM) is arranged below the first electrode (EE) and **in that** the first electrode (EE) can be brought into direct contact with the further electrode (EM) by adjusting the height downwards.

2. Assembly according to claim 1, **characterized in that** a further electrode is arranged on a further sensor body (SKA, SKA2), which is height adjustable relative to the first sensor body (SKE, SKE2) and relative to the pump housing (PG).

3. Assembly according to one of claims 1 to 2, **characterized in that** the sensor arrangement detects the presence of water via the measurement of the electrical conductivity or the electrical resistance, respectively, between two electrodes (EE, EM, EA).

## Revendications

1. Ensemble pompe submersible comprenant un ensemble capteur doté d'un corps de capteur (SKE) réglable en hauteur par rapport à un carter de pompe (TP) et qui comprend au moins une première électrode (EE) détectant la présence d'eau à l'emplacement du corps de capteur (SKE, SKE2), et comprenant un dispositif de commande pour l'évaluation d'un signal de capteur obtenu par l'ensemble capteur pour la mise en marche et/ou l'arrêt de la pompe (TP),
l'ensemble capteur contenant au moins une autre électrode (EM) et la première électrode (EE) étant réglable en hauteur par rapport à l'autre électrode,
**caractérisé**
**en ce que** l'autre électrode (EM) est disposée dans une position fixe par rapport au carter de pompe (PG),
**en ce que** l'autre électrode (EM) est disposée en dessous de la première électrode (EE),
et **en ce que** la première électrode (EE) peut être amenée en contact direct avec l'autre électrode (EM) par un réglage en hauteur vers le bas.

2. Ensemble selon la revendication 1, **caractérisé en ce qu'**une autre électrode est disposée sur un autre corps de capteur (SKA, SKA2), cette autre électrode étant réglable en hauteur par rapport au premier corps de capteur (SKE, SKE2) et par rapport au carter de pompe (PG).

3. Ensemble selon l'une des revendications 1 et 2, **caractérisé en ce que** l'ensemble capteur détecte la présence d'eau par le biais de la mesure de la conductivité électrique ou de la résistance électrique entre deux électrodes (EE, EM, EA).
